# EUROPÄISCHE PATENTSCHRIFT

(11) **EP 3 016 775 B1**
(45) Veröffentlichungstag und Bekanntmachung des Hinweises auf die Patenterteilung: **29.08.2018**
(21) Anmeldenummer: 15730701.8
(22) Anmeldetag: 29.05.2015
(51) Int. Cl.: B23K 101/06, B23K 101/10, B23K 26/262, B21C 37/08, B21C 37/29, B23K 15/00

(54) **VERFAHREN ZUR HERSTELLUNG VON HOHLKÖRPERN AUS HOCHWARMFESTEM STAHL**
METHOD FOR PRODUCING HOLLOW BODIES FROM HEAT RESISTANT STEEL
PROCÉDÉ DE FABRICATION DE CORPS CREUX EN ACIER RÉSISTANT À LA CHALEUR

(30) Priorität: 25.09.2014 DE 102014013999
(43) Veröffentlichungstag der Anmeldung: 11.05.2016
(73) Patentinhaber: STAHL-ARMATUREN PERSTA Gesellschaft mit beschränkter Haftung, 59581 Warstein (DE)
(72) Erfinder: WESTERWELL, Klaus, 58762 Altena (DE); FLOER, Elmar, 59597 Bad Westerkotten (DE)
(74) Vertreter: Schneiders, Josef
(86) Internationale Anmeldenummer: PCT/EP2015/061964
(87) Internationale Veröffentlichungsnummer: WO 2016/045803

(56) Entgegenhaltungen:
- EP-A2- 1 132 670
- DE-A1- 1 515 192
- DE-A1- 2 007 799
- DE-A1-102013 009 209

## Beschreibung

Die Erfindung betrifft ein Verfahren zum Herstellen von druckbelasteten Hohlkörpern in Form von Rohren oder Rohrformstücken für den Einsatz im Frischdampfbereich eines Wärmekraftwerkes, bei welchem die Ränder von gebogenen Blechzuschnitten oder von schalenförmigen Formstücken aus hochwarmfestem Stahl durch eine im Elektronenstrahlschweißverfahren erzeugte stumpfe Schweißnaht ohne Schweißzusatzwerkstoff zu dem Hohlkörper verbunden werden. Derartige Verfahren sind zur Herstellung von vergleichbaren Formkörpern allgemein bekannt (vgl. DE-A-10 2013 009 209 , die als nächstliegender Stand der Technik gilt, oder DE-A-2 007 799).

In der jüngeren Vergangenheit kommen in zunehmendem Umfang für die Versorgung mit elektrischer Energie sogenannte erneuerbare Energien aus Wind- und Solarkraftwerken zum Einsatz. Weil diese Energiequellen nicht kontinuierlich zur Verfügung stehen, werden für die unvermeidbaren Versorgungslücken Wärmekraftwerke benötigt, deren Leistung je nach Bedarf, ggf. mehrmals am Tag, schnell herauf- und heruntergefahren werden kann. Das hat zur Folge, dass alle wärmeführenden Leitungen und Armaturen dieser Wärmekraftwerke nicht nur den für einen guten Wirkungsgrad erforderlichen hohen Temperaturen von mehr als 600°C und Drücken von mehr als 200 bar standhalten müssen, sondern zusätzlich wechselnden Temperaturen mit steilen Temperaturgradienten ausgesetzt sind. Aus diesem Grund kommen hier fast ausschließlich hochwarmfeste Stähle, insbesondere martensitische 9 - 12 %-ige Chromstähle, z. B. X10 CrMoVNb9-1 (Werkstoffnummer 1.4903, Kurzbezeichnung P91) oder X10 CrWMoVNb9-2 (Werkstoffnummer 1.4901, Kurzbezeichnung P92) zum Einsatz.

Die oben genannten neuen Lastkollektive sind insbesondere für die im Frischdampfbereich eines solchen Wärmekraftwerks angeordneten Hohlkörper problematisch, welche nach dem Stand der Technik sehr aufwendig aus Vollmaterial (Guss- oder Schmiedestahl, Stahlhalbzeugen), vorgefertigten gebogenen Blechen oder miteinander verschweißten, schalenförmigen Formteilen hergestellt werden, z. B. geschweißte, druckbelastete Rohre, Rohrformstücke und andere Hohlkörper.

Besonders gefährdet an solchen Hohlkörpern sind deren Schweißnähte. Bei den oben genannten hochwarmfesten Stählen ergibt sich nämlich aufgrund von deren Gefügekomplexität ein erheblicher Abfall der Zeitstandfestigkeit in den Wärmeeinflusszonen (WEZ) der Schweißnähte, der sich auch durch eine lokale Wärmebehandlung der Schweißnähte nicht beseitigen lässt. Aus diesem Grund verlangen die einschlägigen Prüf- und Überwachungsvorschriften für geschweißte Hohlkörper aus solchen hochwarmfesten Stählen die Berücksichtigung eines ausreichenden Schweißnahtfaktors WSF (weld strength factor) und eine besondere Zulassung für den gegebenenfalls verwendeten, die Schweißnaht ausfüllenden Schweißzusatzwerkstoff.

Der Schweißnahtfaktor WSF wird mit zunehmender Prüftemperatur schnell erheblich kleiner. So ist beispielsweise für einen 12 %-igen CrMoV-Stahl bei einer Prüftemperatur von 500°C ein Schweißnahtfaktor von WSF = 0,8 und bei einer Prüftemperatur von 600°C einen Schweißnahtfaktor von WSF = 0,5 erforderlich. Das bedeutet, dass bei Prüftemperaturen von über 600°C die Wandstärke - zumindest im Bereich der Schweißnähte - mindestens verdoppelt werden muss. Bei geschweißten Rohren aus gewalzten Blechen mit überall gleichmäßiger Wandstärke bedeutet dies gegenüber nahtlosen Rohren mindestens eine Verdoppelung des Gewichtes.

Die aufgrund des Schweißnahtfaktors WSF erforderliche Verdickung der Wände beeinträchtigt darüber hinaus die Zeitstandfestigkeit der Hohlkörper, wenn diese häufig großen Temperaturschwankungen mit steilen Temperaturgradienten ausgesetzt sind. Bei dicken Wänden führen nämlich die sich ausbildenden Temperaturunterschiede von innen nach außen bzw. von außen nach innen zu starken, mehrachsigen Spannungen im Inneren des Materials, die die Zeitstandfestigkeit negativ beeinflussen. Das heißt die aufgrund des ungünstigen Schweißnahtfaktors erforderlichen Wandverdickungen machen den Hohlkörper extrem empfindlich gegen schnelle Temperaturschwankungen.

Es ist zwar bereits versucht worden, diese Schwierigkeiten dadurch zu umgehen, dass anstelle von üblichen Schmelzschweißverfahren mit Schweißzusatzwerkstoff Elektronenstrahlschweißverfahren ohne Schweißzusatzwerkstoffe eingesetzt werden. Hierdurch macht man einerseits die schwierige Auswahl eines geeigneten Schweißzusatzwerkstoffes überflüssig. Andererseits entstehen beim Elektronenstrahlschweißen entlang der Schweißnaht nur eng begrenzte Wärmeeinflusszonen (WEZ), in denen die gefährlichen Gefügeveränderungen auftreten. Die neuesten mit Neutronendiffraktometrie durchgeführten Untersuchungen an solchen mit Elektronenstrahlschweißverfahren hergestellten Scheißnähten haben ergeben, dass im Nahbereich von solchen Schweißnähten selbst dann noch die Zeitstandfestigkeit beeinträchtigenden Spannungen verbleiben, wenn versucht wird, diese Schweißnähte nachträglich mit den nach dem Stande der Technik üblichen lokalen Wärmebehandlungen spannungsfrei zu machen (vergleiche "Characterisation of Residual Stress in Electron Beam Welded P91 Plates by Neutron Diffraction" veröffentlicht in International Journal of Metallurgical Engineering 2013, 2(1): 79-84.

Aus diesem Grund schreiben die einschlägigen Prüf- und Überwachungsvorschriften für druckbelastete geschweißte Hohlkörper die oben diskutierten Schweißnahtfaktoren auch dann vor, wenn die Schweißnähte im Elektronenstrahlschweißverfahren ohne Schweißzusatzwerkstoff hergestellt werden. Das hat zur Folge, dass man nunmehr durch die oben diskutierten neuen Lastkollektive an die Grenze des technisch Machbaren gestoßen ist.

Dieses Dilemma macht es nahezu unmöglich, mit den nach dem Stand der Technik zur Verfügung stehenden Mitteln Hohlkörper der angegebenen Art herzustellen, die den oben diskutierten neuen Lastkollektiven ausreichend lange standhalten. Es ist deshalb Aufgabe der Erfindung, das Verfahren der eingangs genannten Art dahingehend weiterzubilden, dass sich auch bei häufigen Temperaturwechseln mit steilen Temperaturgradienten eine gute Zeitstandfestigkeit ergibt.

Gegenstand der Erfindung ist ein Verfahren zum Herstellen von druckbelasteten Hohlkörpern in Form von Rohren oder Rohrformstücken für den Einsatz im Frischdampfbereich eines Wärmekraftwerkes, bei welchem die Ränder von gebogenen Blechzuschnitten oder von schalenförmigen Formstücken aus hochwarmfestem Stahl durch eine im Elektronenstrahlschweißverfahren erzeugte stumpfe Schweißnaht ohne Schweißzusatzwerkstoff zu dem Hohlkörper verbunden werden, wobei sich dieses Verfahren dadurch kennzeichnet,
- dass die Wandstärken des Blechzuschnittes oder der miteinander zu verbindenden schalenförmigen Formstücke im Bereich der miteinander zu verschweißenden Ränder unter Berücksichtigung des Schweißnahtfaktors WSF=1 ausgelegt werden,
- und dass nach Herstellung der Schweißnähte der gesamte geschweißte Hohlkörper einer durchgreifenden Wärmebehandlung mit Erwärmen bis über die Umwandlungstemperatur, Abschrecken und Anlassen unterzogen wird.

Das beim Verfahren gemäß der Erfindung eingesetzte Elektronenstrahlschweißverfahren trägt dadurch zur Lösung der gestellten Aufgabe bei, dass es auch bei sehr großer Schweißnahttiefe ohne jeden Schweißzusatzwerkstoff auskommt, weil der an beiden Schweißnahtflanken der stumpfen Schweißnähte anstehende Grundwerkstoff unmittelbar miteinander verschmolzen wird. Dadurch, dass bei diesem Schweißverfahren die Schmelzwärme auf sehr engem Raum fokussiert ist, ergeben sich weiterhin neben den Schweißnähten nur sehr schmale Wärmeeinflusszonen (WEZ). Durch die erfindungsgemäß schließlich vorgesehene durchgreifende Wärmebehandlung des fertig geschweißten Hohlkörpers durch Erwärmen bis über die Umwandlungstemperatur, Abschrecken und Anlassen bildet sich über die ohnehin schmalen Wärmeeinflusszonen und die Schweißnaht hinweg ein komplett neues Vergütungsgefüge, sodass die Schweißnaht völlig verschwindet und auch im Anschliff nicht mehr als Solche erkennbar ist.

Dieser Umstand macht es möglich, bei der Auslegung der Wandstärke des Hohlkörpers den Schweißnahtfaktor WSF = 1 zugrunde zu legen, d. h. im Bereich der Schweißnähte keine Wandverdickungen mehr vorzusehen. Hierdurch wird der nach dem Verfahren gemäß der Erfindung hergestellte Hohlkörper insgesamt erheblich leichter und schlanker und hat aus diesem bei häufig und schnell wechselnden Temperaturen eine Zeitstandfestigkeit, die der Zeitstandfestigkeit eines nahtlosen Hohlkörpers aus dem gleichen Werkstoff entspricht.

Die bei der Wärmebehandlung des elektronenstrahlgeschweißten Werkstücks anzuwendenden Vergütungsparameter können jeweils dem Werkstoffblatt des als Grundwerkstoff verwendeten hochwarmfesten Stahls entnommen werden.

Durch die vorgesehene Erwärmung auf eine Temperatur oberhalb der Umwandlungstemperatur und das anschließende Abschrecken und Anlassen bilden sich in dem gesamten Hohlkörper Vergütungsstrukturen aus, die ungestört über die Schweißnähte hinweg reichen und dem gesamten Hohlkörper die Eigenschaften eines nahtlos hergestellten Hohlkörpers aus dem gleichen Werkstoff verleihen. Weil keine Schweißnahtfaktoren berücksichtigt werden müssen, kann dieser Hohlkörper insgesamt leichter, schlanker und damit unempfindlicher gegen häufige und schnelle Temperaturwechsel ausgelegt werden.

Ein Ausführungsbeispiel für einen Hohlkörper aus hochwarmfestem Stahl, hergestellt nach dem Verfahren gemäß der Erfindung, besteht aus zwei schalenförmigen, geschmiedeten und durch Elektronenstrahlschweißnähte ohne Schweißzusatzwerkstoff stumpf miteinander verschweißten Hohlkörperhälften, die überall die gleiche Wandstärke haben, die mit einem Schweißnahtfaktor WSF = 1 ausgelegt ist. Ein solches nach der Lehre der Erfindung gefertigter Hohlkörper ist erheblich leichter und schlanker, als ein nach dem Stand der Technik hergestellter Hohlkörper aus dem gleichen Material, bei dessen Herstellung ein Schweißnahtfaktor von 0,5 bis 0,8 beachtet werden müsste. Ein nach der Lehre der Erfindung gefertigter Hohlkörper ist aus diesem Grunde weniger empfindlich gegen häufige und schnelle Temperaturwechsel und hat infolge dessen eine sehr gute Zeitstandfestigkeit.

Das zuletzt gesagte gilt gleichermaßen für einen Hohlkörper aus hochwarmfestem Stahl, der als geschweißtes Rohr ausgebildet ist, bestehend aus einem gewalzten und zu einem Rohr gebogenen rechteckigen Blechzuschnitt, dessen Längskanten durch eine stumpfe Elektronenstrahlschweißnaht miteinander verbunden sind, wobei dieser Blechzuschnitt überall die gleiche Wandstärke hat. Da nach der Lehre der Erfindung bei der Herstellung dieser Rohre ein Schweißnahtfaktor WSF = 1 berücksichtigt werden kann, sind die derart ausgebildeten und hergestellten Rohre leicht und schlank und dementsprechend unempfindlich gegen häufige und schnelle Temperaturwechsel.

Verschiedene Ausführungsbeispiele der Erfindung werden im Folgenden anhand der Zeichnung näher erläutert.

Es zeigen:
- Fig. 1:: Perspektivisch einen Abschnitt eines nach der Lehre der Erfindung hergestellten Rohres;
- Fig. 2:: Perspektivisch eine Halbschale für die Herstellung eines T-Stücks;
- Fig. 3:: Perspektivisch eine Halbschale für die Herstellung eines Rohrbogens;
- Fig. 4-12:: Perspektivisch Halbschalen für die Herstellung von unterschiedlichen Rohrformstücken;
- Fig. 12:: Perspektivisch eine Halbschale für die Herstellung einer Hohlkugel.

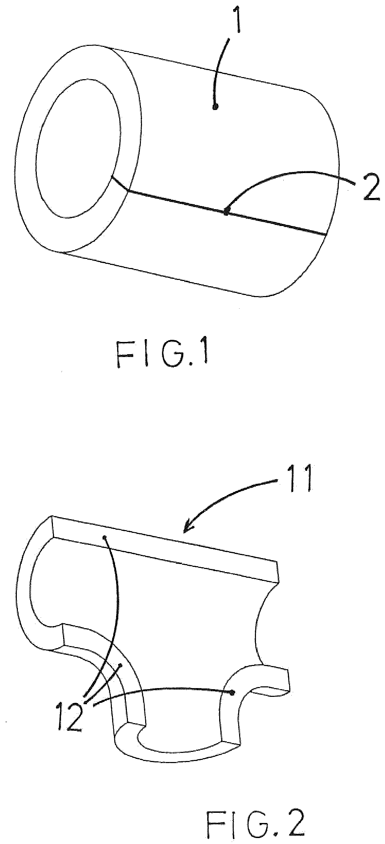

Das in Figur 1 dargestellte Rohr aus hochwarmfestem Stahl besteht aus einem zu einem Rohr gebogenen, gewalzten und überall gleich dicken Blechzuschnitt 1, dessen Längskanten 2 durch Elektronenstrahlschweißen ohne Schweißzusatzstoff stumpf miteinander verschweißt sind. Nach der Verschweißung ist das geschweißte Rohr insgesamt einer Neuvergütung bestehend aus Erwärmen bis über die Umwandlungstemperatur, Abschrecken (durch Luft, Öl oder Wasser) und abschließendes Anlassen nach den Vergütungsvorschriften des verwendeten hochwarmfesten Stahls unterzogen worden. Die Wandstärke des geschweißten Rohres ist überall gleich und entspricht der Wandstärke eines nahtlosen Rohres aus dem gleichen hochwarmfesten Stahl. Dementsprechend ist das in Figur 1 dargestellte geschweißte Rohr verglichen mit einem herkömmlichen geschweißten Rohr weniger empfindlich gegen häufig und schnell wechselnde Temperaturen.

Die in Figur 2 dargestellte, als geschmiedete Halbschale ausgebildete T-Stück-Hälfte 11 aus hochwarmfestem Stahl wird entlang ihrer Oberkante 12 stumpf mit einer nicht dargestellten, spiegelbildlich ausgebildeten T-Stück-Hälfte durch Elektronenstrahlschweißen ohne Schweißzusatzstoff zu einem T-Stück verschweißt. Anschließend wird das fertig verschweißte T-Stück einer Neuvergütung bestehend aus Erwärmen bis über die Umwandlungstemperatur, Abschrecken (durch Luft, Öl oder Wasser) und abschließendes Anlassen nach den Vergütungsvorschriften des verwendeten hochwarmfesten Stahls unterzogen. Die Wandstärke des geschweißten T-Stücks ist überall gleich und entspricht der Wandstärke eines nahtlos hergestellten T-Stücks aus dem gleichen hochwarmfesten Stahl. Dementsprechend ist das geschweißte T-Stück gemäß der Erfindung verglichen mit einem herkömmlich geschweißten T-Stück aus dem gleichen Material weniger empfindlich gegen häufig und schnell wechselnde Temperaturen.

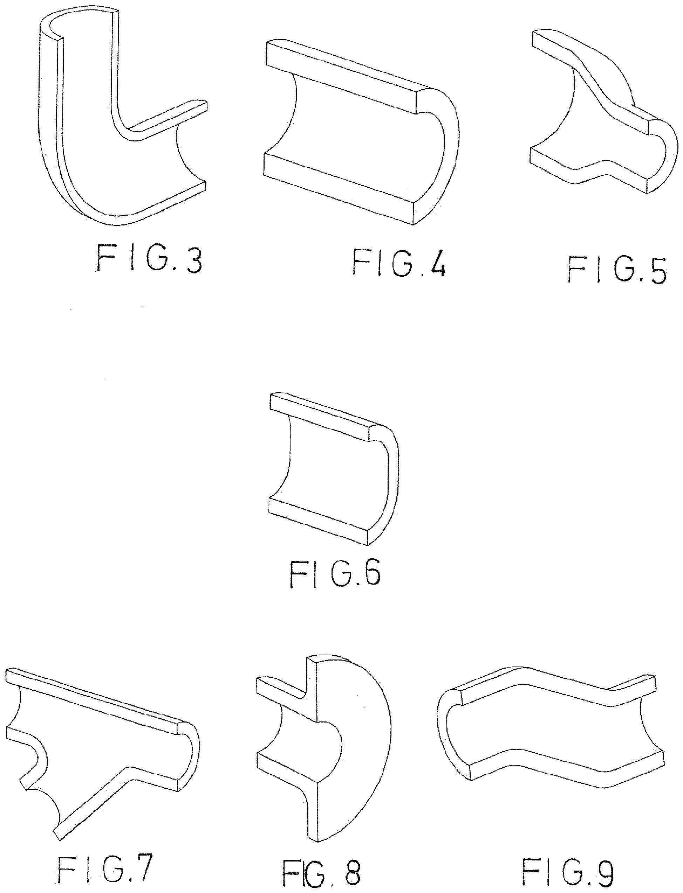

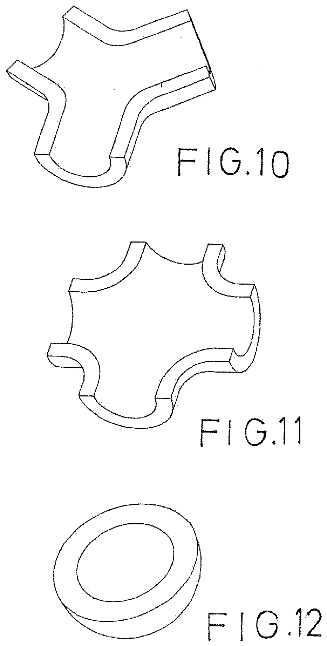

Die Figuren 3 bis 11 zeigen jeweils gesenkgeschmiedete Halbschalen, die analog zum Anhand von Figur 2 erläuterten Verfahren mit jeweils spiegelbildlich ausgebildeten Halbschalen zu geschweißten Rohrformteilen verbunden werden können. Auch hier ist die Wanddicke und damit auch die Dicke der Schweißnähte jeweils mit einem Schweißnahtfaktor WSF=1 ausgelegt. Die Figur 12 zeigt schließlich eine halbkugelförmige Halbschale, die auf die gleiche Art und Weise zu einem dünnwandigen, kugelförmigen Hohlkörper verbunden werden kann.

## Patentansprüche

1. Verfahren zum Herstellen von druckbelasteten Hohlkörpern in Form von Rohren oder Rohrformstücken für den Einsatz im Frischdampfbereich eines Wärmekraftwerkes, bei welchem die Ränder von gebogenen Blechzuschnitten(1) oder von schalenförmigen Formstücken (11) aus hochwarmfestem Stahl durch eine im Elektronenstrahlschweißverfahren erzeugte stumpfe Schweißnaht ohne Schweißzusatzwerkstoff zu dem Hohlkörper verbunden werden,
**dadurch gekennzeichnet,**
- **dass** die Wandstärke des Blechzuschnittes (1) oder der miteinander zu verbindenden schalenförmigen Formstücke (11) im Bereich der miteinander zu verschweißenden Ränder (2; 12) unter Berücksichtigung eines Schweißnahtfaktors WSF = 1 ausgelegt wird
- und **dass** nach Herstellung der Schweißnähte der gesamte geschweißte Hohlkörper einer durchgreifenden Wärmebehandlung mit Erwärmen bis über die Umwandlungstemperatur, Abschrecken und Anlassen unterzogen wird.

## Claims

1. Method for producing pressure-loaded hollow bodies in the form of pipes or pipe fittings for use in the fresh steam region of a thermal power station, in which method the edges of bent sheet metal blanks (1) or of shell-like shaped parts (11) composed of high-temperature-resistant steel are connected to form the hollow body by means of a butt weld seam produced by the electron beam welding process without welding filler material,
**characterized**
- **in that** the wall thickness of the sheet metal blank (1), or of the shell-like shaped parts (11) to be connected to one another, in the region of the edges (2; 12) to be welded to one another is designed while taking into account a weld strength factor WSF = 1,
- and **in that**, after producing the weld seams, the entire welded hollow body is subjected to a rigorous heat treatment by heating to beyond the transformation temperature, quenching and tempering.

## Revendications

1. Procédé de fabrication de corps creux soumis à la pression sous la forme de tubes ou de pièces tubulaires à utiliser dans la section de vapeur vive d'une centrale thermique, dans lequel on joint en formant le corps creux les bords de pièces de tôle cintrées (1) ou de pièces moulées en forme de coquilles (11) en acier résistant à la chaleur au moyen d'une soudure bout à bout produite par le procédé de soudage par faisceau d'électrons sans matériau d'apport de soudage, **caractérisé en ce que**
- l'épaisseur de paroi de la pièce de tôle (1) ou des pièces moulées en forme de coquilles (11) à joindre l'une à l'autre dans la région des bords (2; 12) à souder l'un à l'autre est dimensionnée en tenant compte d'un facteur de soudure WSF = 1, et
- après la réalisation des soudures, tout le corps creux soudé est soumis à un traitement thermique à coeur avec chauffage jusqu'au-delà de la température de transformation, trempe et revenu.
